# EUROPEAN PATENT SPECIFICATION

(11) **EP 2 549 848 B1**
(45) Date of publication and mention of the grant of the patent: **22.07.2015**
(21) Application number: 11759796.3
(22) Date of filing: 22.03.2011
(51) Int. Cl.: A01B 35/22, A01B 61/04, A01C 5/06, A01C 7/20

(54) **ROW UNIT HAVING BIASING DEVICE AND SEEDER WITH SUCH UNITS**
REIHENEINHEIT MIT VORSPANNUNGSVORRICHTUNG UND SÄMASCHINE MIT SOLCHEN EINHEITEN
UNITÉ DE RANGÉE AVEC UN DISPOSITIF DE SOLLICITATION ET SEMOIR COMPRENANT DE TELLES UNITÉES

(30) Priority: 23.03.2010 SE 1050273
(43) Date of publication of application: 30.01.2013
(73) Proprietor: Väderstad-Verken AB, 590 21 Väderstad (SE)
(72) Inventor: STARK, Magnus, S-596 93 Skänninge (SE)
(74) Representative: Bokinge, Ole
(86) International application number: PCT/SE2011/050316
(87) International publication number: WO 2011/119094

(56) References cited:
- FR-A1- 2 939 599
- GB-A- 695 711
- US-A- 3 706 345
- US-A- 3 815 685
- US-A- 4 380 853
- US-A- 5 544 709
- US-A- 5 555 824
- US-A- 5 573 072
- US-A1- 2007 039 746
- US-B1- 6 454 019
- US-B1- 7 387 077
- US-B1- 7 401 561
- US-B2- 7 540 333

## Description

### Technical Field

The present invention relates to an agricultural implement in the form of a row unit adapted to be attached to a transverse bar of an agricultural machine, which row unit is biased against the ground by means of a biasing device.

### Background Art

In the agricultural sector use is often made of implements that are intended to be trailed behind an agricultural machine, such as a tractor. Such implements usually comprise a bar extending transversely of the direction of travel of the agricultural machine, also called a transverse bar, onto which separate tool units can be attached side by side to simultaneously cultivate a strip of land substantially corresponding to the length of the transverse bar. The individual tool units are often referred to as "row units", since they cultivate the ground along rows, or furrows, in the direction of travel of the agricultural machine.

An example of row units are row units intended for sowing. Certain crops grown within the agricultural sector require, for optimal growth, that the plants are spaced apart by a certain distance from one another. When sowing this kind of crops row units adapted to plant one seed at a time are often used. In this way, each of the row units, when pulled behind the agricultural machine, can plant single seeds in a row in such a way that the distance between the seeds is selected so as to ensure the best possible result.

Row units may also comprise, besides seed distributing mechanisms, a plurality of cultivating parts, often in the form of wheel arrangements for making furrows, for flattening and for covering. There are also row units that are used solely for different types of soil cultivation and that are not intended for sowing.

For a row unit to function properly it must be located at a suitable level relative to the ground to bring parts adapted therefore into engagement with the soil, and it must exert a certain pressure on the cultivated ground. In many cases, the weight of the row unit itself is not enough to achieve sufficient pressure, which means that there is a need for biasing the row unit against the ground. To handle irregularities in the ground surface in the direction of travel of the agricultural machine, the biasing device is normally resilient, and to handle irregularities in the ground surface in the direction of the transverse bar each individual row unit is separately biased.

US7540333 discloses a device in which a cultivating row unit is biased against the ground by means of a coil spring arranged in a torsion configuration. When a torsional load is applied to the coil spring it exerts pressure on a separate down-pressure unit, which transmits the force to a link system connected to the cultivating unit. The coil spring and the pressure unit are arranged on a designated mounting means, which is in turn arranged adjacent to an additional mounting means for attaching the row unit to a transverse bar disposed on the agricultural machine pulling the implements.

US 2007/0039746 A1 discloses a down pressure assembly for an agricultural implement to be pulled by a tractor. The down pressure assembly includes at least one torsion element disposed on a frame, the torsion element having one fixed mounting to the frame and one adjustable mounting to the frame. The assembly further includes an adjustment mechanism for varying the torsion of the torsion element at the adjustable mounting; and at least one down pressure member for receiving a force from the torsion element to apply a downward force to the top members of the frame.

Other known biasing devices for row units are, for example, the ones that use hydraulics and/or compression springs to apply a biasing force on links arranged between the cultivating tools and the transverse bar onto which the row unit is mounted.

A drawback of known biasing devices is that they have a proportionately large number of parts and that they are relatively complex and, in some cases, difficult to adjust. There is thus a need for an alternative and/or improved biasing device for biasing a row unit against the ground.

### Summary of the Invention

A general object is to provide a row unit heaving a biasing device which is easy to manufacture and which does not require a large number of separate parts.

The invention is defined by the appended independent claims. Embodiments of the invention will be apparent from the dependent claims, from the following description and the appended drawings.

According to a first aspect, a row unit to be attached to a transverse bar of an agricultural implement is provided, which row unit comprises a tool part having at least one cultivating part, and a biasing device for biasing the tool part against the ground, the biasing device comprising a spring means arranged between a first abutment, which is fixed relative to the transverse bar, and a second abutment, which is movable relative to the transverse bar, and a link arrangement adapted to be connected between the transverse bar and the tool part, the link arrangement extending substantially in the direction of travel of the row unit and the movable abutment being attached to said link arrangement, the link arrangement comprising an upper link element and a lower link element, which are adapted to move parallel to each other.

The biasing device further comprises a connecting frame, which is adapted to be fixed relative to the transverse bar and which comprises the first abutment.

The spring means comprises a torsion bar whose main extension is substantially parallel to the ground and the main effective torsion portion of the torsion bar comprises at least two substantially parallel torsion portions. The torsion bar comprises a lever for rotating a torsion portion of the torsion bar about its longitudinal axis.

A simple device is thus obtained for rotating the torsion bar about its longitudinal axis.

The lever can be arranged to bear against the adjustable abutment.

The lever can be in the form of a separate part. The lever can consist of an end portion of the torsion bar that extends at an angle to the main effective torsion portion of the torsion bar.

The end portion can be arranged to bear against the adjustable abutment. The lever can be substantially perpendicular to the main torsion portion of the torsion bar.

By "extends substantially in the direction of travel of the row unit" is meant that the link arrangement extends between the row unit and the tool part, which are located substantially one after the other in the direction of travel of the agricultural machine. This does not exclude that the link arrangement can move and/or be rotated in such a manner that one or several portions thereof are displaced upwards or downwards.

By "attachment to a transverse bar" is meant either removable or fixed/permanent attachment of the row unit to the transverse bar.

By "transverse bar" is meant a connecting device that allows attachment of the row units in such a manner that they move substantially parallel to each other in the direction of travel of the agricultural machine. Thus, "transverse bar" does not exclude a bar that forms an angle other than 90° with the direction of travel.

A "cultivating part" can be adapted to engage or not to engage with the soil. The row unit can be adapted for sowing.

By "torsion bar" is meant a bar portion which when rotated about its longitudinal direction exerts an angular force or torque moment.

By "substantially parallel to the ground" is meant a direction that is substantially horizontal in normal use.

An advantage of this solution is that it offers a simple design, which enables effective resilient biasing of the tool part relative to the ground without a large number of separate parts.

A main active torsion portion of the torsion bar can be perpendicular to a main direction of travel of the row unit.

A main active torsion portion of the torsion bar can be substantially parallel to the transverse bar.

By "main active torsion portion" is meant the extent of the torsion bar that is adapted to be rotated about its longitudinal axis to provide an angular force or torque moment.

Between the substantially parallel torsion portions that extend substantially parallel to the ground, i.e. substantially horizontally, there is thus a "transition portion", i.e. a curved part between two substantially parallel portions. Alternatively, the curved part can be replaced by a separate part to which the respective torsion portion is attached and which acts as a lever. This has the advantage of offering long spring travel and large torque moment, which enables a stronger biasing force.

At least one of the abutments can be adjustable. This has the advantage that the biasing can be set as required.

The adjustable abutment can comprise a pin which is movable between predetermined positions.

The movable abutment can be arranged on the lower link element. The connecting frame and/or the link arrangement can comprise recesses, which can be of a shape that enables form-fitting engagement with the torsion bar. This ensures a stable structure.

An imaginary plane that is defined by said at least two torsion portions can form an angle of at least 45°, at least 60°, or at least 75° with a horizontal plane. A large angle reduces the horizontal space requirements.

An imaginary plane that is defined by said at least two torsion portions (9) can be substantially continuous. This facilitates mounting.

Alternatively, an imaginary plane that is defined by said at least two torsion portions (9) can be non-continuous, for example broken by a mounting lug and/or one of said link elements. As a result, a favourable force distribution is obtained.

According to a second aspect, a seeder comprising at least two row units according to the above is provided.

The seeder can be a precision seeder.

### Brief Description of the Drawings

Fig. 1 is a perspective view of an agricultural implement that is adapted to be trailed behind an agricultural machine, such as a tractor, comprising a transverse bar onto which a plurality of row units are mounted side by side.
Fig. 2 is a perspective view of a row unit according to Fig. 1.
Fig. 3 is a perspective view of a biasing device of the row unit in Fig. 2.
Fig. 4 shows the biasing device in Fig. 3 from a different angle.
Fig. 5 is a side view of the biasing device in Figs 3 and 4.
Figs 6-8 show yet another embodiment of a biasing device.

### Description of Embodiments

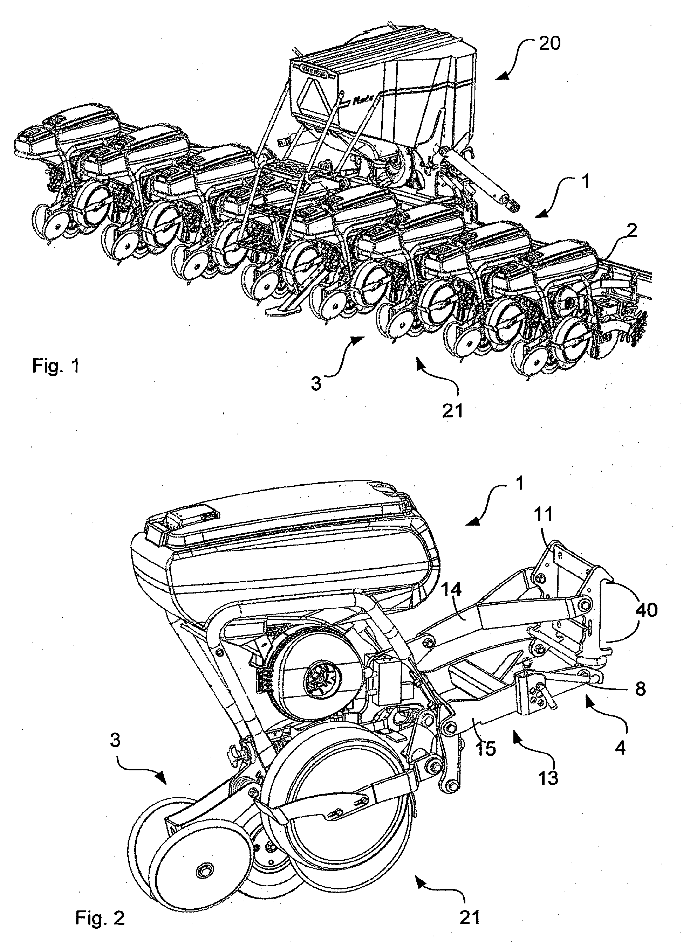

Fig. 1 shows a plurality of row units 1 mounted side by side along a transverse bar 2 of an agricultural implement 20, here in the form of a precision seeder, also called a "planter", which is adapted to be trailed behind an agricultural machine, such as a tractor, in such a manner that the strips of land across which the agricultural machine travels are cultivated along rows, or furrows, corresponding to the movement of the individual row units 1. The row units 1 are adapted for sowing and comprise a plurality of cultivating parts 21.

Fig. 2 shows a row unit 1. The row unit 1 comprises a tool part 3 with a plurality of cultivating parts 21 and a connecting frame 11, which is adapted to fixedly attach the row unit 1 to the transverse bar 2. Recesses 40 are provided on the connecting frame 11 to enable form-fitting attachment of the same to the transverse bar 2. A link arrangement 13 is arranged between the connecting frame 11 and the tool part 3. The link arrangement 13 comprises an upper link element 14 and a lower link element 15, which at their respective rear ends are attached to the connecting frame 11 and at their respective front ends are attached to the tool part 3. The upper link element 14 and the lower link element 15 are adapted to move parallel to each other.

A biasing device 4 is adapted to bias the tool part 3 against the ground.

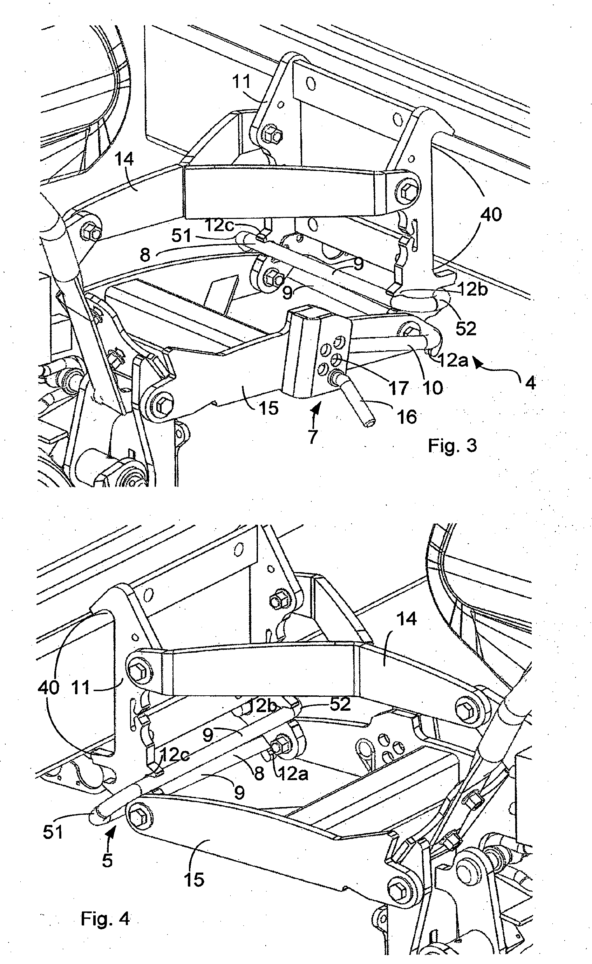

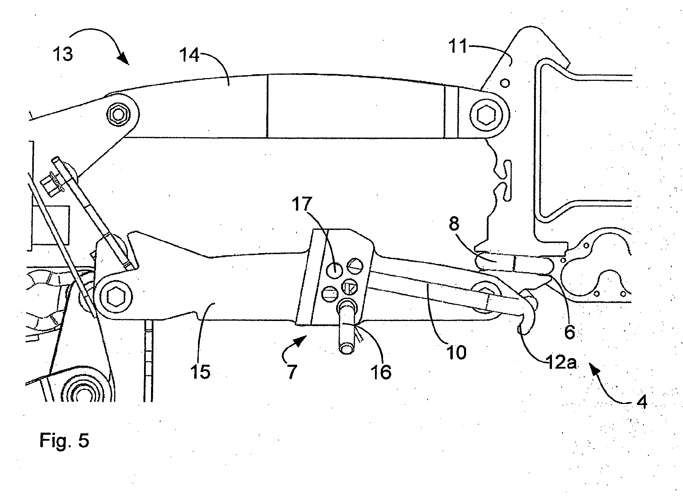

Figs 3 and 4 show the biasing device 4 in Fig. 2, and Fig. 5 is a side view thereof.

The biasing device 4 comprises a torsion bar 8, which is arranged between a first abutment 6, which is adapted to be fixed relative to the transverse bar 2, and a second abutment 7, which is movable relative to the transverse bar 2. The fixed abutment 6 is integrated with the connecting frame 11, and the movable abutment 7 is arranged on the lower link element 15. The main extension of the torsion bar 8 is substantially parallel to the ground, and in this case substantially parallel to the transverse bar 2, and comprises two substantially parallel torsion portions 9. The torsion bar 8 further comprises two transition portions 51, 52 and an end portion 10, which forms a lever for rotating the torsion portions 9 about their longitudinal axis.

The end portion 10 is substantially perpendicular to the torsion portions 9 and extends substantially in the direction of travel, along the lower link element 15.

The end portion 10 is adapted to bear against the movable abutment 7.

The movable abutment 7 is adjustable and comprises a pin 16 which is movable between predetermined positions in the form of through holes 17. The lower link element 15 comprises a recess 12a that enables form-fitting engagement with the torsion bar 8. The connecting frame 11, too, comprises recesses 12b, 12c that enable form-fitting engagement with the torsion bar 8.

When the agricultural implement 20 is trailed behind an agricultural machine, the individual row units 1 move side by side in the direction of travel of the agricultural machine, each row unit sowing seeds along a row, or furrow, in the ground.

Since each of the row units 1 has a separate biasing device 4 they are able to move in the vertical direction independently of each other and thereby to handle any irregularities in the ground surface transversely of the direction of travel.

The biasing device 4 of the respective row unit 1 causes biasing of the tool part 3 of the row unit 1 against the ground, such that the cultivating parts 21, for example press wheels and sowing discs, are brought into engagement with the ground in a suitable manner.

In this case, the two mutually substantially parallel torsion portions 9 offer sufficiently long spring travel and sufficient torque moment to ensure excellent biasing. The movable abutment 7 is adjustable by the pin 16 being movable between different positions 17. The higher up the selected position 17 is, the greater the rotation of the end portion 10 will be and thus the biasing force of the torsion bar 8 and its torsion portions 9.

In one embodiment, the extension of the transverse bar 2 is not perpendicular to the direction of travel. The transverse bar 2 can, for example, form an angle other than 90° with the direction of travel such that the row units 1 mounted thereon do not form a straight line transversely of the direction of travel.

In one embodiment, the agricultural implement 20 is placed in front of or at the side of an agricultural machine.

Mounting means can be attached to the bar in a suitable manner. The attachment can be intended to be permanent or removable.

In one embodiment, the transverse bar 2 forms an integrated part with one or several mounting means for individual row units 1.

The connecting frame 11 can form an integrated part with a mounting device for attaching the row unit to the transverse bar 2.

The connecting frame 11 can form an integrated part with the transverse bar 2.

The link arrangement 13 can comprise one, two or more link elements, which can be adapted to move substantially parallel to each other.

The respective link elements 14 and/or 15 can each comprise one, two or more parts that extend between the transverse bar 2 and the tool part 3.

Each link element 14 and/or 15 can be attached at one, two or more points of attachment to the connecting frame 11 and/or the tool part 3.

In one embodiment, the biasing device 4 is arranged on the upper link element 14.

In one embodiment, the link arrangement 13 comprises only one link element.

In one embodiment, the tool part 3 is connected directly to the transverse bar 2.

The abutments 6, 7 can be integral parts of the parts to which they are attached.

The movable abutment 7 can be arranged on the upper link element 14.

The fixed abutment 6 can be adjustable. In one embodiment, both the fixed abutment 6 and the movable abutment 7 are adjustable.

The predetermined positions 17 between which the pin 16 is movable can be provided in the form of through holes, recesses, protruding parts, or can be of any other suitable design.

The extension of the torsion bar 8 can comprise one, two or more substantially parallel torsion portions 9. The number of substantially parallel torsion portions can be selected so as to obtain the desired spring travel.

The torsion bar can be of the desired cross section, for example a quadrangular cross section (square or rectangular) or a round cross section (circular or oval). Furthermore, the torsion bar can be homogeneous or tubular. It is also possible to provide a torsion bar that is made up of plates.

In one embodiment, the lever 10 that bears against a movable abutment is not perpendicular to the extension of a torsion portion.

In one embodiment, the lever 10 is in the form of a separate part arranged between the torsion bar and an abutment. The separate part can be adapted to form a lever for rotating one or several torsion portions.

In yet another embodiment, two or more substantially parallel torsion portions are interconnected by a separate link element, which acts as a lever for transmitting the torque moment from one torsion portion to the next torsion portion.

A square cross section of the torsion bar can facilitate the arranging of a separate lever between a torsion portion of the torsion bar and a fixed or movable abutment.

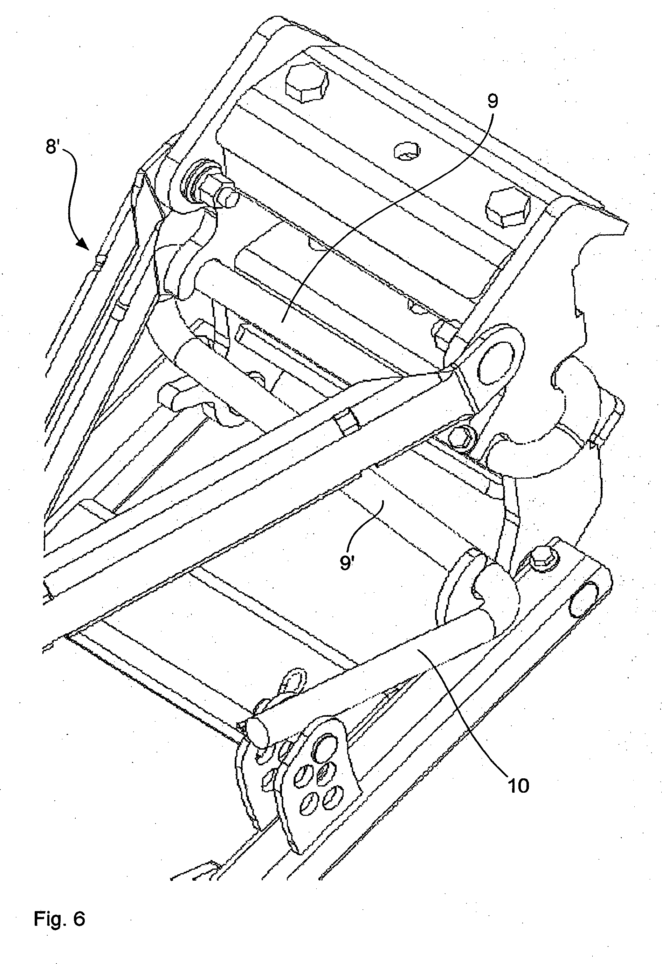

Referring now to Figs 6-8, a further embodiment of the biasing device will be described.

As in the embodiment shown in Figs 2-5, the torsion bar 8' has a lever 10 and a pair of substantially parallel main torsion portions 9', with a curved portion arranged therebetween. The curved portion has an angle of curvature of approximately 180 degrees.

Two main torsion portions 9' (substantially straight portions) can define an imaginary plane, which may form an angle of at least 45°, at least 60°, or at least 75 ° with a horizontal plane.

In the embodiment shown in Figs 2-5, the torsion portions 9 are located on different sides of a part of the connecting frame 11. The mounting lugs for attaching the lower link elements extend through an imaginary plane defined by the two main torsion portions 9. This allows a compact design, which offers a favourable force distribution.

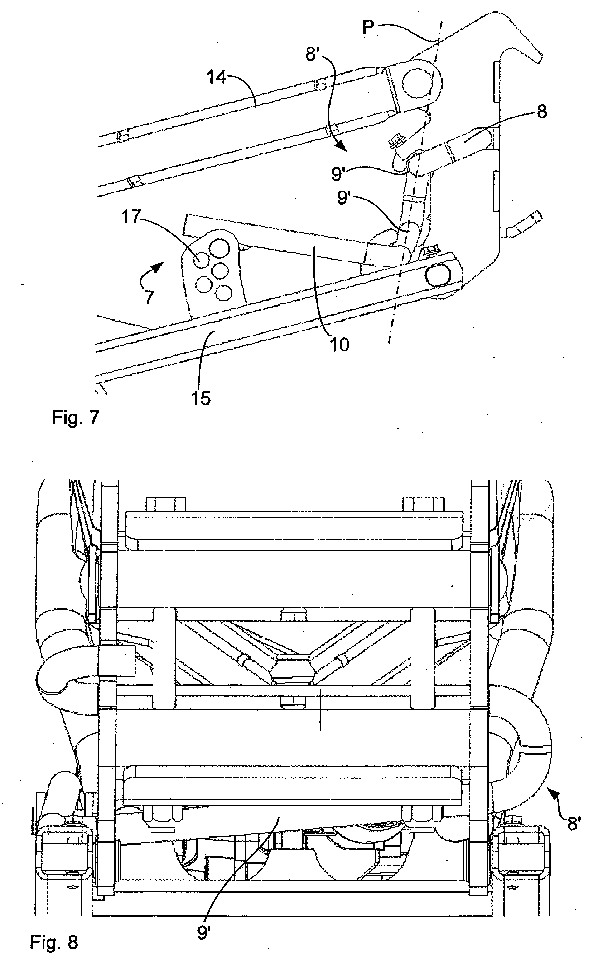

In the embodiment shown in Figs 6-8, the two main torsion portions 9' are located on the same side of the connecting frame 11, and an imaginary plane defined by the two main torsion portions is substantially continuous. It is apparent from Fig. 7 that the torsion spring 8' can be inserted by moving it transversely of the direction of travel and substantially horizontally. As a result, a spring arrangement that is easier to mount and replace is obtained.

## Claims

1. A row unit (1) to be attached to a transverse bar (2) of an agricultural implement (20), which row unit (1) comprises
a tool part (3) having at least one cultivating part (21),
a biasing device (4) for biasing the tool part (3) against the ground, the biasing device (4) comprising a spring means (5) arranged between a first abutment (6), which is fixed relative to the transverse bar (2), and a second abutment (7), which is movable relative to the transverse bar (2), and
a link arrangement (13) adapted to be connected between the transverse bar (2) and the tool part (3), the link arrangement (13) extending substantially in the direction of travel of the row unit and the movable abutment (7) being attached to said link arrangement (13),
the link arrangement (13) comprising an upper link element (14) and a lower link element (15), which are adapted to move parallel to each other, and
the biasing device (4) further comprises a connecting frame (11), which is adapted to be fixed relative to the transverse bar (2) and which comprises the first abutment (6),
**characterised in that**
the spring means (5) comprises a torsion bar (8) whose main extension is substantially parallel to the ground, the main effective torsion portion of the torsion bar (8) comprising at least two substantially parallel torsion portions (9), and
the torsion bar (8) comprises a lever (10) for rotating a torsion portion (9) of the torsion bar (8) about its longitudinal axis.

2. A row unit (1) according to claim 1, wherein a main active torsion portion (9) of the torsion bar (8) is perpendicular to a main direction of travel of the row unit.

3. A row unit (1) according to claim 1 or 2, wherein a main active torsion portion (9) of the torsion bar (8) is substantially parallel to the transverse bar (2).

4. A row unit (1) according to any one of the preceding claims, wherein at least one of the abutments (6, 7) is adjustable.

5. A row unit (1) according to claim 4, wherein the adjustable abutment comprises a pin (16), which is movable between predetermined positions (17).

6. A row unit (1) according to any one of claims 1-5, wherein the movable abutment (7) is arranged on the lower link element (15).

7. A row unit (1) according to any one of claims 1-6, wherein the connecting frame (11) and/or the link arrangement (13) comprise/comprises recesses (12) of a shape that enables form-fitting engagement with the torsion bar (8).

8. A row unit according to any one of the preceding claims, wherein an imaginary plane (P), which is substantially defined by said at least two torsion portions (9), forms an angle of at least 45°, at least 60°, or at least 75° with a horizontal plane.

9. A row unit according to any one of the preceding claims, wherein an imaginary plane (P), which is substantially defined by said at least two torsion portions (9), is substantially continuous.

10. A row unit according to any one of claims 1-8, wherein an imaginary plane (P), which is substantially defined by said at least two torsion portions (9), is non-continuous, for example broken by a mounting lug and/or one of said link elements.

11. A seeder comprising at least two row units (1) according to any one of the preceding claims.

12. A seeder according to claim 11, wherein the seeder is a precision seeder (20).

## Patentansprüche

1. Reiheneinheit (1), welche an einer Querstange (2) eines Landwirtschaftsgeräts (20) anbringbar ist, wobei die Reiheneinheit (1) umfasst
ein Werkzeugteil (3), das zumindest ein Kultivierungsteil (21) aufweist,
eine Vorspannvorrichtung (4) zum Vorspannen des Werkzeugstiels (3) gegen den Boden, wobei die Vorspannvorrichtung (4) eine Federeinrichtung (5) umfasst, die zwischen einem ersten Auflager (6), welches relativ zu der Querstange (2) fixiert ist, und einem zweiten Auflager (7) angeordnet ist, welches relativ zu der Quersange (2) bewegbar ist, und
eine Verbindungsanordnung (13), welche dafür ausgelegt ist, zwischen der Querstange (2) und dem Werkzeugteil (3) verbunden zu werden, wobei sich die Verbindungsanordnung (13) im Wesentlichen in der Richtung einer Fortbewegung der Reiheneinheit erstreckt und wobei das bewegliche Auflager (7) an der Verbindungsanordnung (13) angebracht ist,
wobei die Verbindungsanordnung (13) ein oberes Verbindungselement (14) und ein unteres Verbindungselement (15) umfasst, welche ausgelegt sind, sich parallel zueinander zu bewegen, und
wobei die Vorspannvorrichtung (4) ferner einen Verbindungsrahmen (11) umfasst, welcher ausgelegt ist, relativ zu der Querstange (2) fixiert zu sein, und welcher das erste Auflager (6) umfasst,
**dadurch gekennzeichnet, dass**
die Federeinrichtung (5) eine Torsionsstange (8) umfasst, deren Hauptausdehnung im Wesentlichen parallel zu dem Boden ist, wobei der wirksame Haupttorsionsabschnitt der Torsionsstange (8) zumindest zwei im Wesentlichen parallele Torsionsabschnitte (9) umfasst, und
die Torsionsstange (8) einen Hebel (10) zum Drehen eines Torsionsabschnitts (9) der Torsionsstange (8) um ihre Längsachse umfasst.

2. Reiheneinheit (1) nach Anspruch 1, wobei ein aktiver Haupttorsionsabschnitt (9) der Torsionsstange (8) senkrecht zu einer Hauptrichtung einer Fortbewegung der Reiheneinheit ist.

3. Reiheneinheit (1) nach Anspruch 1 oder 2, wobei ein aktiver Haupttorsionsabschnitt (9) der Torsionsstange (8) im Wesentlichen parallel zu der Querstange (2) ist.

4. Reiheneinheit (1) nach einem der vorhergehenden Ansprüche, wobei zumindest eines der Auflager (6, 7) einstellbar ist.

5. Reiheneinheit (1) nach Anspruch 4, wobei das einstellbare Auflager einen Stift (16) umfasst, welcher zwischen vorbestimmten Positionen (17) bewegbar ist.

6. Reiheneinheit (1) nach einem der Ansprüche 1 bis 5, wobei das bewegbare Auflager (7) auf dem unteren Verbindungselement (15) angeordnet ist.

7. Reiheneinheit (1) nach einem der Ansprüche 1 bis 6, wobei der Verbindungsrahmen (11) und/oder die Verbindungsanordnung (13) Aussparungen (12) einer Form umfassen/umfasst, welche einen Form-Passeingriff mit der Torsionsstange (8) ermöglicht.

8. Reiheneinheit nach einem der vorhergehenden Ansprüche,
wobei eine imaginäre Ebene (P), welche im Wesentlichen durch die zumindest zwei Torsionsabschnitte (9) definiert ist, einen Winkel von zumindest 45°, zumindest 60° oder zumindest 75° mit einer horizontalen Ebene bildet.

9. Reiheneinheit nach einem der vorhergehenden Ansprüche,
wobei eine imaginäre Ebene (P), welche im Wesentlichen durch die zumindest zwei Torsionsabschnitte (9) definiert ist, im Wesentlichen kontinuierlich ist.

10. Reiheneinheit nach einem der Ansprüche 1 bis 8, wobei eine imaginäre Ebene (P), welche im Wesentlichen durch die zumindest zwei Torsionsabschnitte (9) definiert ist, nicht-kontinuierlich ist, beispielsweise durch einen Befestigungsbügel und/oder eines der Verbindungselemente unterbrochen ist.

11. Sägerät, umfassend zumindest zwei Reiheneinheiten (1) nach einem der vorhergehenden Ansprüche.

12. Sägerät nach Anspruch 11, wobei das Sägerät ein Präzisions-Sägerät (20) ist.

## Revendications

1. Rayonneur (1) destiné à être fixé à une barre transversale (2) d'un outil agricole (20), le rayonneur (1) comprenant
une partie outil (3) possédant au moins une partie de travail du sol (21),
un dispositif de sollicitation (4) permettant de solliciter la partie outil (3) contre le sol, le dispositif de sollicitation (4) comportant un moyen de ressort (5) disposé entre une première butée (6) qui est fixe par rapport à la barre transversale (2), et une seconde butée (7) qui est mobile par rapport à la barre transversale (2), et
un mécanisme articulé (13) adapté pour être connecté entre la barre transversale (2) et la partie outil (3), le mécanisme articulé (13) s'étendant sensiblement dans la direction de déplacement du rayonneur et la butée mobile (7) étant fixée audit mécanisme articulé (13),
le mécanisme articulé (13) comportant un élément de liaison supérieur (14) et un élément de liaison inférieur (15) qui sont adaptés pour se déplacer parallèlement l'un par rapport à l'autre, et
le dispositif de sollicitation (4) comprend en outre une structure de connexion (11) qui est adaptée pour être fixée par rapport à la barre transversale (2) et qui comprend la première butée (6),
**caractérisé en ce que**
le moyen de ressort (5) comprend une barre de torsion (8) dont le prolongement principal est sensiblement parallèle au sol, la partie de torsion efficace principale de la barre de torsion (8) comprenant au moins deux parties de torsion sensiblement parallèles (9), et
la barre de torsion (8) comprend un levier (10) permettant de faire tourner une partie de torsion (9) de la barre de torsion (8) autour de son axe longitudinal.

2. Rayonneur (1) selon la revendication 1, dans lequel une partie de torsion active principale (9) de la barre de torsion (8) est perpendiculaire à une direction de déplacement principale du rayonneur.

3. Rayonneur (1) selon la revendication 1 ou 2, dans lequel une partie de torsion active principale (9) de la barre de torsion (8) est sensiblement parallèle à la barre transversale (2).

4. Rayonneur (1) selon l'une quelconque des revendications précédentes, dans lequel au moins l'une des butées (6, 7) est ajustable.

5. Rayonneur (1) selon la revendication 4, dans lequel la butée ajustable comprend un axe (16) qui est déplaçable entre des positions prédéterminées (17).

6. Rayonneur (1) selon l'une quelconque des revendications 1 à 5, dans lequel la butée mobile (7) est disposée sur l'élément de liaison inférieur (15).

7. Rayonneur (1) selon l'une quelconque des revendications 1 à 6, dans lequel la structure de connexion (11) et/ou le mécanisme articulé (13) comprend/comprennent des renfoncements (12) d'une forme qui permet une mise en prise par complémentarité de forme avec la barre de torsion (8).

8. Rayonneur selon l'une quelconque des revendications précédentes, dans lequel un plan imaginaire (P), qui est sensiblement défini par lesdites au moins deux parties de torsion (9), forme un angle d'au moins 45°, d'au moins 60°, ou d'au moins 75° avec un plan horizontal.

9. Rayonneur selon l'une quelconque des revendications précédentes, dans lequel un plan imaginaire (P), qui est sensiblement défini par lesdites au moins deux parties de torsion (9), est sensiblement continu.

10. Rayonneur selon l'une quelconque des revendications 1 à 8, dans lequel un plan imaginaire (P), qui est sensiblement défini par lesdites au moins deux parties de torsion (9), est non continu, par exemple brisé par une patte de fixation et/ou l'un desdits éléments de liaison.

11. Semoir comprenant au moins deux rayonneurs (1) selon l'une quelconque des revendications précédentes.

12. Semoir selon la revendication 11, dans lequel le semoir est un semoir de précision (20).
